# EUROPEAN PATENT APPLICATION

(11) **EP 4 825 221 A1**
(43) Date of publication of application: **21.10.2026**
(21) Application number: 23961468.8
(22) Date of filing: 13.12.2023
(51) Int. Cl.: A24F 40/50

(54) **POWER SUPPLY UNIT FOR AEROSOL GENERATION DEVICE**

(71) Applicant: Japan Tobacco Inc., Tokyo 105-6927 (JP)
(72) Inventor: MINATO Junji, Tokyo 130-8603 (JP)
(74) Representative: Hoffmann Eitle
(86) International application number: PCT/JP2023/044720
(87) International publication number: WO 2025/126402

(57) **Abstract**

A power supply unit (110) of an inhalation device (100) for heating an aerosol source to generate an aerosol, comprising: a power source unit (111), a step-up DC/DC converter (82), a charging IC (81) and/or an MCU (1), and a main board (50). The charging IC (81) and/or the MCU (1) have a power supply voltage measurement unit (Ps1, Ps2) for measuring the voltage of the power source unit (111) and a power supply voltage measurement unit (Ps1, Ps2) is connected via voltage measurement wiring (530, 540) to a position closer to the step-up DC/DC converter (82) than a power connection (51) on power supply wiring (510) between the power connection (51) and the step-up DC/DC converter (82).

## Description

### TECHNICAL FIELD

The present disclosure relates to a power supply unit for an aerosol-generating device for generating an aerosol by heating an aerosol source.

### BACKGROUND ART

Aerosol-generating devices that generate an aerosol to which a flavor component has been added and enable a user to inhale the generated aerosol, for example, are conventionally known. For example, PTL 1 discloses an aerosol-generating device that includes a heater, and a micro controller unit (MCU), and a battery for supplying power to the heater and the MCU.

As described in PTL 1, the MCU is operated by power supplied from the battery, but a voltage greater than a predetermined minimum voltage must be input to the MCU to ensure correct operation of the MCU.

### CITATION LIST

### PATENT LITERATURE

PTL 1: JP 2020-509760 A

### SUMMARY OF INVENTION

### TECHNICAL PROBLEM

In an aerosol-generating device, if there is a discrepancy between the voltage input to the control unit and the measured voltage, it may not be possible to ensure that the control unit is operating correctly. In particular during discharge (heating), a voltage drop due to the wiring resistance between the battery occurs and the discrepancy between actual input voltage and the measured voltage increases. For this reason, it is desirable to improve the measurement accuracy of the power supply voltage during discharge.

The present disclosure provides a power supply unit of an aerosol-generating device with improved accuracy of measuring the power supply voltage during discharge.

### SOLUTION TO PROBLEM

The present disclosure relates to
a power supply unit for an aerosol-generating device for generating an aerosol by heating an aerosol source, the power supply unit comprising:
a power source for supplying power to a heating unit that heats the aerosol source;
a power conversion unit for converting power from the power source and supplying power for heating to the heating unit;
a control unit for controlling the operation of the power supply unit; and
a board on which a power connection to which power is supplied from the power source, the power conversion unit, and the control unit are mounted, wherein
the control unit has a power supply voltage measurement unit for measuring the voltage of the power source, and
the power supply voltage measurement unit is connected via voltage measurement wiring to a position closer to the power conversion unit than the power connection on the power supply wiring that connects the power connection and the power conversion unit.

### ADVANTAGEOUS EFFECTS OF INVENTION

According to the present disclosure, the accuracy of measuring the power supply voltage during discharge can be improved.

### BRIEF DESCRIPTION OF DRAWINGS

Fig. 1 is a schematic diagram schematically showing a first configuration example of an inhalation device (inhalation device 100A);
Fig. 2 is a schematic diagram schematically showing a second configuration example of an inhalation device (inhalation device 100B);
Fig. 3 is an external front view of the inhalation device 100;
Fig. 4 is an exploded oblique view of an internal unit 20 of the inhalation device 100;
Fig. 5 is an explanatory diagram showing elements and so on mounted on a front surface 501 of a main board 50;
Fig. 6 is an explanatory diagram showing elements and so on mounted on a rear surface 502 of the main board 50;
Fig. 7 is a diagram showing the main conductive tracks of a first conductive layer L1 to a tenth conductive layer L10 (L1 layer to L10 layer on the drawing) provided on the main board 50; and
Fig. 8 is a schematic block diagram showing electrical connections of the main elements of the internal unit 20.

### DESCRIPTION OF EMBODIMENTS

Embodiments of the power supply unit for an aerosol-generating device according to the present disclosure are described in detail below with reference to the drawings. The embodiment described below is an exemplary case in which the aerosol-generating device according to the present disclosure is applied to an inhalation device. Note that the drawings are to be viewed in the orientation of the reference signs. Furthermore, hereinafter, identical or similar elements may be assigned identical or similar reference signs, and descriptions thereof may be omitted or simplified as appropriate.

### 1. Configuration Example of the Inhalation Device

An inhalation device is a device for generating a substance to be inhaled by a user. Hereinafter, the substance generated by the inhalation device will be described as being an aerosol. Alternatively, the substance generated by the inhalation device may be a gas.

### 1-1 First Configuration Example

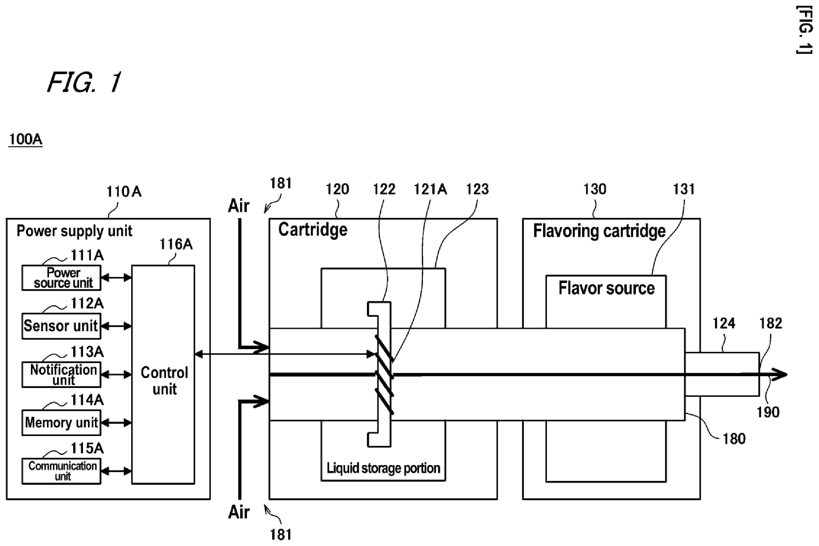

Fig. 1 is a schematic diagram schematically showing a first configuration example of the inhalation device. As shown in Fig. 1, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. As an example, the sensor unit 112A is configured by a pressure sensor such as a condenser microphone, a flow rate sensor or a temperature sensor, etc., and acquires values associated with inhalation by a user. As another example, the sensor unit 112A is configured by an input device, such as a button or switch, for accepting input of information from the user.

The notification unit 113A notifies the user of information. The information notified to the user by the notification unit 113A includes, for example, a state of charge (SOC) indicating the state of charge of the power source unit 111A, the preheating time at the time of inhalation, and time periods when inhalation is possible, and so on. The notification unit 113A is configured by a light-emitting device that emits light, a display device that displays images, a sound output device that outputs sound, or a vibration device that vibrates, and so on, for example.

The memory unit 114A stores various types of information for operation of the inhalation device 100A. The memory unit 114A is configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. The control unit 116A is realized by a Central Processing Unit (CPU) or an electronic circuit such as a microprocessor, for example.

The liquid storage portion 123 stores the aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in Fig. 1, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A. As an example, electricity may be supplied to the heating unit 121A when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input. Note that the user's inhalation operation on the inhalation device 100A can be detected, for example, based on the pressure (internal pressure) within the inhalation device 100A exceeding a predetermined threshold, detected by a puff sensor.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, further generating other types of aerosol.

Furthermore, the means for atomizing the aerosol source is not limited to heating by the heating unit 121A. For example, the means for atomizing the aerosol source may be vibration atomization or induction heating.

### 2. Second Configuration Example

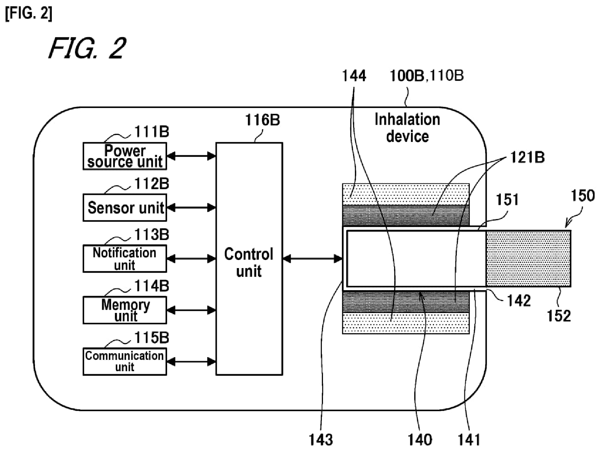

Fig. 2 is a schematic diagram schematically showing a second configuration example of the inhalation device. As shown in Fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144. The power supply unit 110 accommodating the power source unit 111A, and the heating unit 121A were separate elements in the inhalation device 100A of the first configuration example, but the power source unit 111B and the heating unit 121B constitute a single piece in the inhalation device 100B of the second configuration example. That is, the inhalation device 100B of the second configuration example can also be said to have a power supply unit 110B with a built-in heating unit.

The power source unit 111B, the sensor unit 112B, the notification unit 113B, the memory unit 114B, the communication unit 115B, and the control unit 116B are each substantially the same as the corresponding components included in the inhalation device 100A of the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 that has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In the state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not depicted on the drawings, and reaches the inside of the user's mouth together with the aerosol generated from the substrate portion 151.

In the example shown in Fig. 2, the heating unit 121B has a film-like form and is arranged so as to cover the outer circumference of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor, which generates heat by means of induction heating, may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the power source unit 111A, 11B may be referred to as the "power source unit 111", the sensor unit 112A, 112B may be referred to as the "sensor unit 112", the notification unit 113A, 113B may be referred to as the "notification unit 113", the memory unit 114A, 114B may be referred to as the "memory unit 114", the communication unit 115A, 115B may be referred to as the "communication unit 115", the control unit 116A, 116B may be referred to as the "control unit 116", and the heating unit 121A, 121B may be referred to as the "heating unit 121".

### 2. Example of Structural Configuration of the Inhalation Device

Next, a structural example of the inhalation device 100 (power supply unit 110) is described. In the following, in the inhalation device 100, the insertion and removal direction of the stick-type substrate 150 relative to the inhalation device 100 is defined as the vertical direction, the sliding movement direction of a shutter 12 described below is defined as the front-rear direction, and the direction perpendicular to the vertical direction and the front-rear direction is defined as the left-right direction. Also, as shown in the figures, Fr is the front, Rr is the rear, L is the left side, R is the right side, U is up, and D is down.

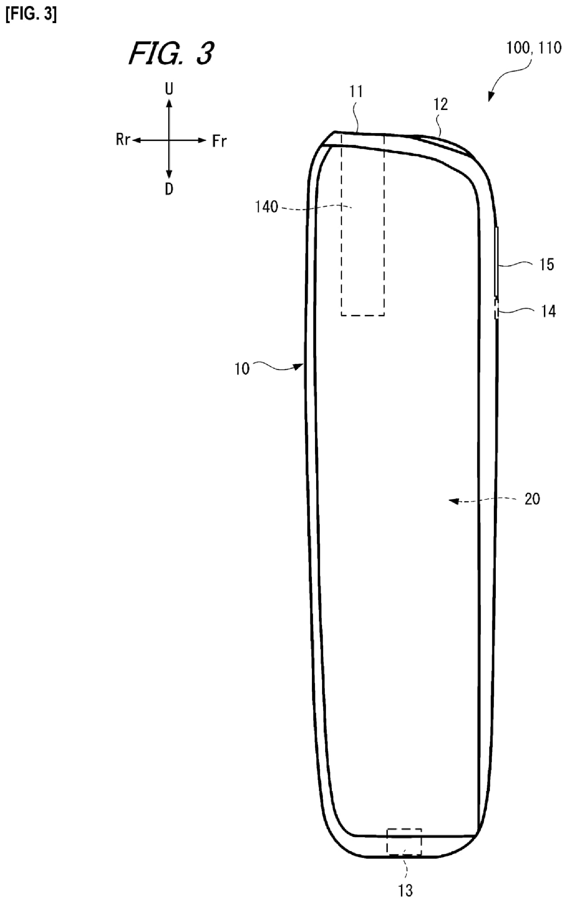

Fig. 3 is an external front view of the inhalation device 100. The inhalation device 100 has an overall rounded cuboid shape and is configured long in the vertical direction. For example, the user holds the inhalation device 100 in one hand, with fingertips in contact with surfaces of the inhalation device 100. Note that the shape of the inhalation device 100 is not limited to a cuboid shape, but can be any shape.

The inhalation device 100 comprises a housing 10 constituting the exterior of the inhalation device 100, and an internal unit 20 housed in the housing 10.

The upper face of the housing 10 is provided with an opening 11 for inserting and removing the stick-type substrate 150, and a shutter 12 that can slide in the front-rear direction. The opening 11 communicates with the accommodating portion 140, which accommodates the stick-type substrate 150. The shutter 12 can selectively take an open state, which opens the opening 11 and allows the insertion and removal of the stick-shaped base material 150, and a closed state, which closes the opening 11.

A Universal Serial Bus (USB) connector 13 is provided on the bottom face side of the housing 10. The USB connector 13 is configured so that it can be electrically connected with an external power source capable of supplying power to charge a power source unit 111. The USB connector 13 is a receptacle into which an opposing plug can be inserted, for example a USB Type-C shaped receptacle.

The front of the housing 10 is provided with an operation portion 14 and a light-emitting unit 15, both connected to a main board 50 described later. The operation portion 14 is arranged below the light-emitting unit 15.

The operation portion 14 is a button-type switch that can be operated by a user, and is an input device for receiving input of information from a user. The user pressing the operation portion 14, for example, activates a Micro Controller Unit (MCU) 1 or the heating unit 121.

The light-emitting unit 15 is configured by a light-emitting device such as a light-emitting diode (LED), for example. A plurality of the light emitting devices is provided, and configured to emit light in a plurality of light emitting colors. The light-emitting unit 15 is an example of the notification unit 113, and emits light in predetermined light-emitting modes by commands from the MCU 1 to notify the user of predetermined information. The predetermined light-emitting mode may be, for example, a mode in which light is emitted in different colors according to predetermined information, but is not limited to this. For example, it may also be a mode such as varying the intensity of the light emission or a light emission pattern (for example, flashing at predetermined time intervals). Also, the predetermined information is, for example, operating information indicating whether the power source of the inhalation device 100 is on or not.

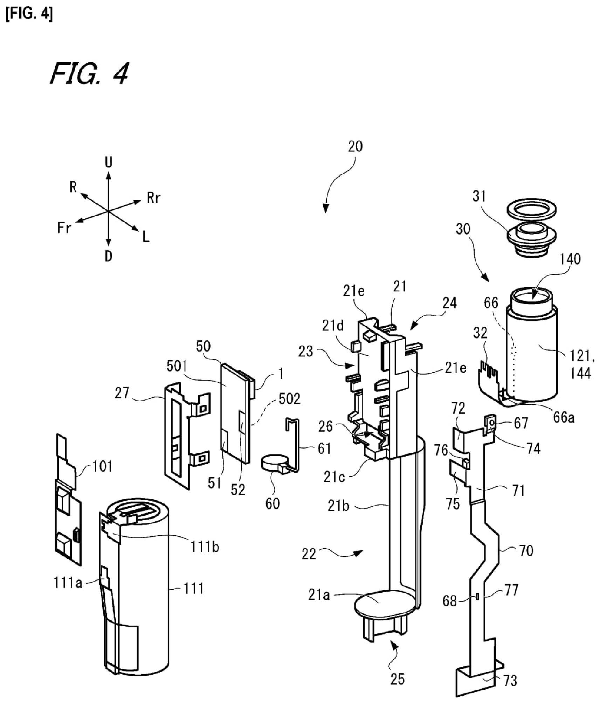

The internal unit 20 is now described with reference to Figs. 4 to 6.

As shown in Fig. 4, the internal unit 20 includes a chassis 21, the main board 50, the power source unit 111, a power source Flexible Printed Circuit (FPC) 101, a heater assembly 30, a vibration device 60, a main FPC 70, and a plurality of temperature sensors 66 to 68.

The chassis 21 includes a power supply arrangement unit 22 in which the power source unit 111 is arranged, a board arrangement part 23 in which the main board 50 is arranged, a heater arrangement part 24 in which the heater assembly 30 is arranged, and a USB connector arrangement part 25 in which the USB connector 13 is arranged.

The power supply arrangement unit 22 has a cylindrical shape with a portion of the side cut out, in other words a substantially semi-cylindrical shape. The power supply arrangement unit 22 has a bottom wall portion 21a, a side wall portion 21b having a circular arc shape and standing upright from the bottom wall portion 21a, and an upper wall portion 21c provided at the upper end of the side wall portion 21b. The power source unit 111 is arranged in a space surrounded by the bottom wall portion 21a, the side wall portion 21b, and the bottom face of the upper wall portion 21c.

The board arrangement part 23 is provided on a vertical wall section 21d that stands upright from the upper wall portion 21c of the power supply arrangement unit 22. The board arrangement part 23 is provided on one side of the vertical wall section 21d in the front-rear direction, and the main board 50 is fixed to the board arrangement part 23 with a bracket 27.

The heater arrangement part 24 is provided on the side of the vertical wall section 21d opposite to the board arrangement part 23 in the front-rear direction. The heater arrangement part 24 has a space surrounded by the vertical wall portion 21d, a pair of left and right wall portions 21e extending from the vertical wall portion 21d in the front-rear direction, and an upper face of the upper wall portion 21c, and the heater assembly 30 is arranged in this space.

The USB connector arrangement part 25 extends downwards from the bottom wall portion 21a of the power supply arrangement unit 22.

The main board 50 is a rigid circuit board with a plurality of electronic components (elements) mounted on both sides thereof. The rigid circuit board is not flexible and is generally set with a thickness of 300 µm to 1600 µm. The main board 50 is mounted with components such as, for example, the MCU 1, the communication unit 115, a charging IC (Integrated Circuit) 81, and a heating element and a light-emitting element that are not shown on the drawings. In the following description, the surface of the main board 50 that is opposite to the vertical wall section 21d is the back surface 502, and the surface that is opposite to the back surface 502 is the front surface 501.

A power connection 51 to which the power source FPC 101 is connected, and a main FPC connection 52 to which the main FPC 70 is connected, for example, are provided on the front surface 501 of the main board 50.

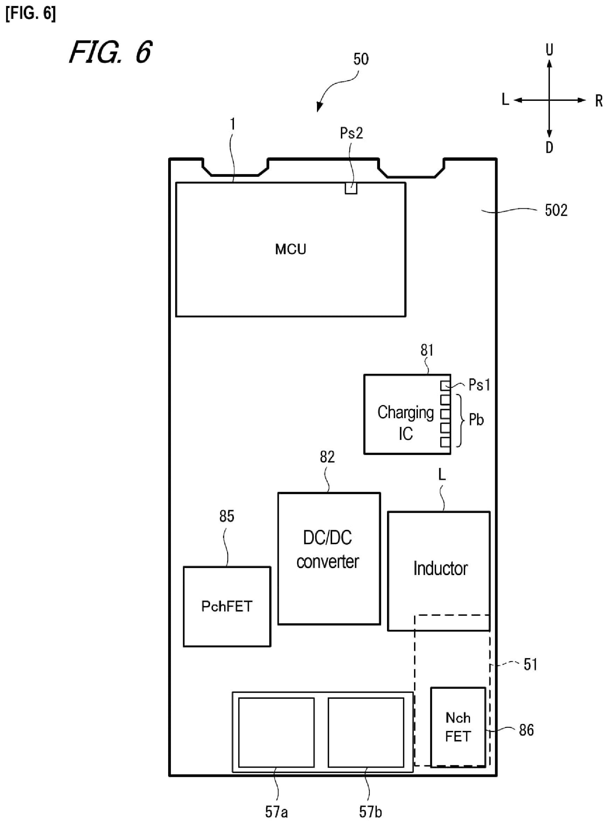

Also, as shown in Fig. 6, the back surface 502 of the main board 50 is provided with heater connections 57a, 57b to which the heating unit 121 of the heater assembly 30 is connected. The heater connections 57a, 57b are provided on a lower region of the main board 50. The main board 50 is described in detail later.

Returning to Fig. 4, the power source unit 111 is a lithium ion secondary battery with a cylindrical shape, for example. The power source unit 111 is electrically connected to the power connection 51 of the main board 50 via the power source FPC 101. A positive electrode tab 111a and a negative electrode tab 111b are provided on the power source unit 111. The power source FPC 101 is connected to the positive electrode tab 111a and the negative electrode tab 111b of the power source unit 111, and is also connected to the power connection 51 of the main board 50. The power supplied from the power source unit 111 is transmitted to the main board 50 through a conductive pattern formed on the power source FPC 101 and supplied to each component.

The heater assembly 30 comprises the heating unit 121, the accommodating portion 140, and the heat insulating portion 144. The heating unit 121 is, for example, a film heater, and is wound around the outer circumference of the accommodating portion 140. The heating unit 121 is provided with a connection 32 extending from the lower part and connected to the heater connections 57a, 57b of the main board 50. The connection 32 is connected to the heater connections 57a, 57b via a through hole 26 provided in the lower part of the vertical wall section 21d.

The heater assembly 30 is provided with a stick guide 31. The stick guide 31 is provided on an upper portion of the heater assembly 30, and guides the stick-type substrate 150 into the accommodating portion 140. The stick guide 31 is a cylindrical member and constitutes a part of the accommodating portion 140.

Furthermore, the heater assembly 30 is provided with the heater temperature sensor 66 that is capable of measuring the temperature of the heating unit 121. The heater temperature sensor 66 is, for example, a thermistor and the output therefrom, which depends on the electrical resistance value, is input to the MCU 1.

The vibrating device 60 includes a vibrating element such as a vibrating motor, for example. The vibrating device 60 is arranged between the top surface of the power source unit 111 and the upper wall portion 21c, and lead wires 61 of the vibrating device 60 extend upwards and are connected to the main FPC 70. The vibrating device 60 is an example of the notification unit 113, and vibrates in a predetermined vibration mode in response to a command from the MCU 1 to notify the user of predetermined information. For example, at the start or end of heating of the stick-type substrate 150, the vibration device 60 vibrates in a predetermined vibration mode to notify the user of the start or end of heating.

The main FPC 70 is a flexible circuit board having flexibility. The main FPC 70 is formed elongated in the vertical direction and connects the various parts of the power supply unit 110 to the main board 50. Compared with a rigid circuit board, the main FPC 70 has more flexibility in arrangement within the housing 10, so the power supply unit 110 can be reduced in size.

The main FPC 70 includes: a main body portion 71 provided on the left side of the chassis 21 and extending long in the vertical direction; a board connection portion 72 connected to the main board 50; a USB connector connection 73 to which the USB connector 13 is connected; a housing temperature sensor connection 74 to which a housing temperature sensor 67 for measuring the temperature of the housing 10 is connected; a heater temperature sensor connection 75 to which the heater temperature sensor 66 is connected via a lead wire 66a; a vibrating device connection 76 to which the vibrating device 60 is connected; and a power source temperature sensor connection 77 to which the power source temperature sensor 68 is connected. It should be noted that each connection 72 to 77 may be directly connected to the component in question or may be indirectly connected, for example via a lead wire or the like.

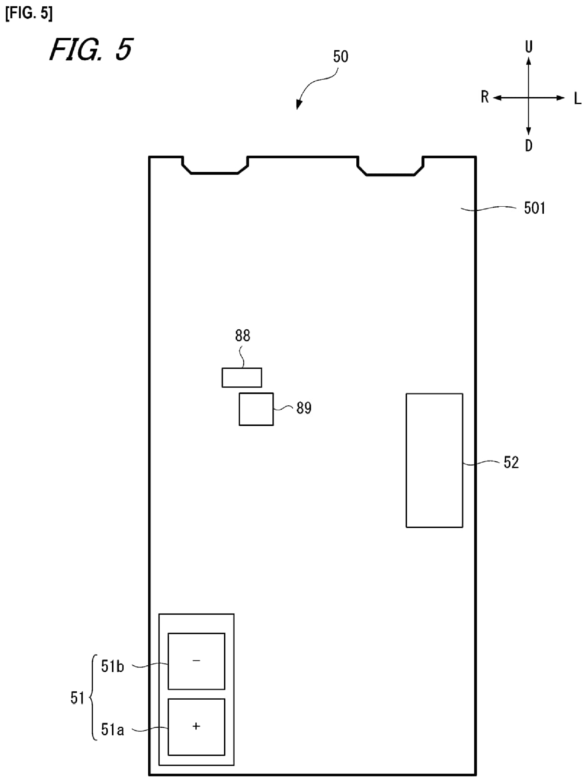

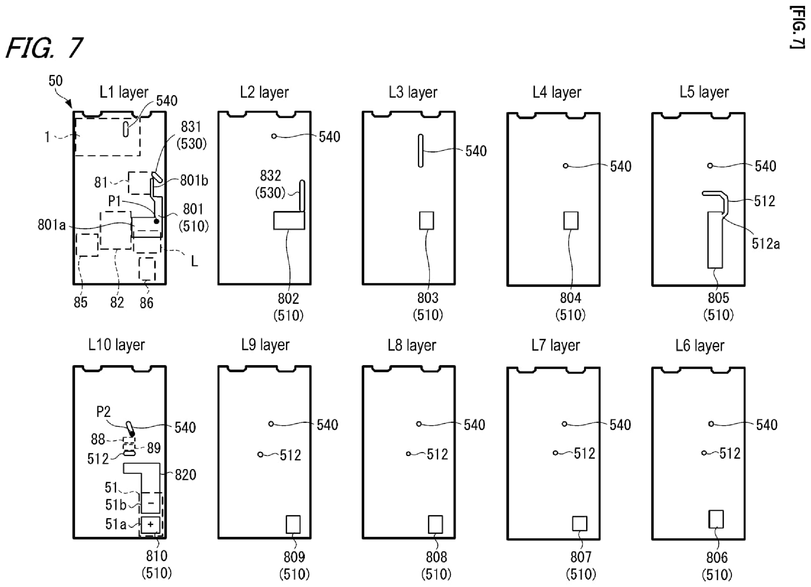

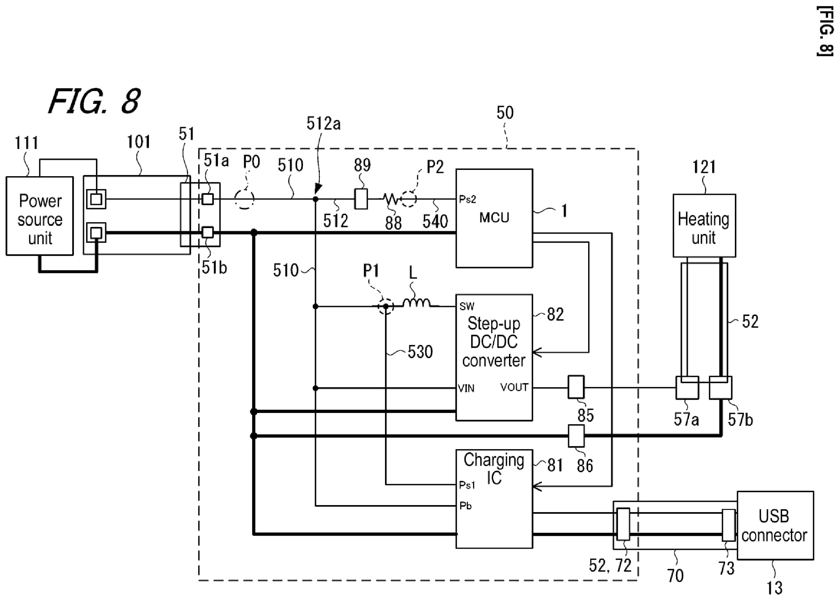

Next, details of the main board 50 are described with reference to Figs. 5 to 8. Figs. 5 and 6 are schematic diagrams of the front surface 501 and the back surface 502 of the main board 50 respectively. Fig. 7 shows main conductive tracks of a first conductive layer L1 to a tenth conductive layer L10 provided on the main board 50. The first conductive layer L1 is a conductive track exposed on the back surface 502, and the tenth conductive layer L10 is a conductive track exposed on the front surface 501. Note that Fig. 7 is a diagram showing the first conductive layer L1 to tenth conductive layer L10 viewed from the back surface 502 of the main board 50. Fig. 8 is a schematic block diagram showing electrical connections of the main elements of the internal unit 20. In Fig. 8, the wiring indicated by the thick solid line is wiring that is at the same potential as the reference potential (ground potential) of the internal unit 20 (wiring connected to the ground provided in the internal unit 20).

As shown in Fig. 5, the power connection 51 is provided at the right end in a lower region of the front surface 501 of the main board 50, and includes a positive electrode connection 51a and a negative electrode connection 51b provided above the positive electrode connection 51a. The power connection 51 is electrically connected to the power source unit 111 via the power source FPC 101. The main FPC connection 52 is provided at the left end in substantially the central region in the vertical direction of the main board 50. The main FPC 70 is connected from the front to the main FPC connection 52.

It should be noted that a plurality of circuit components, and so on are mounted on the front surface 501 of the main board 50, but in Fig. 5 only a resistance 88 and a switching element 89 (more details below) of the plurality of circuit components are illustrated for simplicity.

As shown in Fig. 6, on the back surface 502 of the main board 50, the MCU 1, the charging IC 81, a step-up DC/DC converter 82, an inductor L, a heating switch 85 for the high-potential side (Pch FET in the figure), a heating switch 86 for the low-potential side (Nch FET in the figure), and the heater connections 57a, 57b, and so on, are mounted. Note that in the following description, the step-up DC/DC converter 82, the inductor L, and the heating switches 85, 86 may also be referred to as heating elements.

The MCU 1 is mounted on the upper region ofthe back surface 502 of the main board 50. The MCU 1 functions as the previously described control unit 116, and controls the heating of the heating unit 121. The communication unit 115, which is a communication interface wirelessly communicative with an external device, may also be mounted on the MCU 1.

The charging IC 81 is mounted in the central region of the back surface 502 of the main board 50. The charging IC 81 provides charging control to supply power to the power source unit 111 from an external power source, which is not illustrated on the drawings, that is input via the USB connector 13. The charging IC 81 also supplies power from the power source unit 111 to the various electronic components, and so on, mounted on the main board 50 during charging and/or discharging.

The step-up DC/DC converter 82 and the inductor L are mounted below the charging IC 81 on the back surface 502 of the main board 50. The step-up DC/DC converter 82 is an IC that functions as a switching regulator, used in combination with the inductor L provided on the input side, to convert the input DC voltage into a predetermined voltage. As shown in Fig. 8, one end of the inductor L is connected to a switching terminal SW of the step-up DC/DC converter 82 and the other end of the inductor L is connected to an input terminal VIN of the step-up DC/DC converter 82. The step-up DC/DC converter 82 performs on/off control of a built-in transistor connected to the switching terminal SW, thereby stepping up the voltage input to the switching terminal SW and outputting it from an output terminal VOUT.

Returning to Fig. 6, the heating switch 85 is mounted on the left side of the step-up DC/DC converter 82. The heating switch 86 is mounted at the right end in the lower region of the back surface 502 of the main board 50. The heating switches 85, 86 are field effect transistors (FETs), for example.

The heater connections 57a, 57b are provided centrally in the lower region of the back surface 502 of the main board 50. The connection 32 extending from below the heater assembly 30 is connected to the heater connections 57a, 57b, and power from the power source unit 111 is supplied to the heating unit 121 of the heater assembly 30.

In this way, by providing the power connection 51 on the front surface 501 and mounting the heating elements on the back surface 502, it becomes possible to place the heating elements and the power connection 51 closer together. In this way, power losses during heating can be reduced.

To explain the flow of power during discharge (heating), the power from the power source unit 111 input from the positive electrode connection 51a of the power connection 51 is supplied to the heater connection 57a through power supply wiring 510, which will be described later, the step-up DC/DC converter 82, and the switch 85 for high-potential side heating.

To explain the flow of power during charging, power supplied from the USB connector 13 via the main FPC 70 and main FPC connection 52 to the charging IC 81 flows from a power connection pin Pb of the charging IC 81 through the power supply wiring 510, which is described later, to the positive electrode connection 51a of the power connection 51.

As shown in Fig. 7, the MCU 1 mounted on the back surface 502, the charging IC 81, the step-up DC/DC converter 82, the inductor L, and the heating switches 85, 86, and so on, are connected to the first conductive layer L1 of the main board 50. Also, portions of the tenth conductive layer L10 (lower end portions of conductive tracks 810, 820, which will be described later) constitute the positive electrode connection 51a and the negative electrode connection 51b.

The conductive track 810 of the tenth conductive layer L10 forming the positive electrode connection 51a is connected to conductive tracks 809 to 805 of the ninth conductive layer L9 to the fifth conductive layer L5, which are formed at substantially the same position. The conductive track 805 of the fifth conductive layer L5 extends upward in Fig. 7 over the main board 50, and is connected to the conductive track 804 of the fourth conductive layer L4. The conductive track 804 of the fourth conductive layer L4 is connected to conductive tracks 803 to 801 of the third conductive layer L3 to the first conductive layer L1, which are formed at substantially the same position. Note that the connection between the conductive tracks of different conductive layers is made through vias that are not shown on the drawings.

The conductive track 801 is provided with a converter connection 801a to which the step-up DC/DC converter 82 is connected, and the conductive tracks 801 to 810 constitute the power supply wiring 510 between the power connection 51 and the step-up DC/DC converter 82. During discharge (heating), power is supplied from the power connection 51 through the power supply wiring 510 to the step-up DC/DC converter 82.

The conductive track 801 is also provided with a charging IC connection 801b to which the charging IC 81 is connected, in a position above the connection with the step-up DC/DC converter 82. The power connection pin Pb of the charging IC 81 is connected to the power supply wiring 510 at the charging IC connection 801b. In this way, power from the power source unit 111 is supplied to the charging IC 81 from the charging IC connection 801b, which is connected to the power supply wiring 510. Also, power supplied from the USB connector 13 to the charging IC 81 when charging is transmitted from the charging IC connection 801b to the power source unit 111 through the power supply wiring 510.

In this way, the path during discharge and the power path during charging share the conductive tracks 801 to 810 in the plurality of conductive layers L1 to L10. As a result, by sharing a portion of the conductive tracks between the power path during discharge and the power path during charging when heating and charging are not being performed simultaneously, it is possible to reduce the size of the main board 50. Note that not all of the conductive tracks 801 to 810 need be shared between the power path during discharge and the power path during charging. For example, they may be configured to share the conductive tracks 802 to 810 and branch at the conductive track 802.

Note that the conductive track 820 of the tenth conductive layer L10 serving as the negative electrode connection 51b extends upward in Fig. 7, and is connected to ground wiring formed over a wide range across the tenth conductive layer L10 to the first conductive layer L1. Description of the ground wiring is omitted.

A power supply voltage measurement pin Ps1 of the charging IC 81 is connected to a conductive track 831 formed on the first conductive layer L1. The conductive track 831 is connected to the conductive track 801 of the first conductive layer L1 via a conductive track 832 formed on the second conductive layer L2. The conductive tracks 831, 832 constitute voltage measurement wiring 530 for measuring the output voltage of the power source unit 111 (hereinafter also referred to as the power supply voltage), and the power supply voltage measurement pin Ps1 measures the power supply voltage at the connection between the voltage measurement wiring 530 and the power supply wiring 510. The voltage measurement wiring 530 can be formed with a narrower width than the power supply wiring 510 because the current flowing is smaller compared with that in the power supply wiring 510.

The power supply voltage measured by the power supply voltage measurement pin Ps1 of the charging IC 81 is used for charging control by the charging IC 81, voltage error detection, and so on. Specifically explaining voltage error detection, the charging IC 81 compares the power supply voltage measured by the power supply voltage measurement pin Ps1, such as during charging and discharging, with a first threshold (for example, 2.5 V), which is the lower limit of the power supply voltage at which the charging IC 81 is operable. The charging IC 81 stops operation if the power supply voltage measured by the power supply voltage measurement pin Ps1 is less than the first threshold. For example, the charging IC 81 stops providing power for charging control, various electronic components mounted in the main board 50, and so on.

Incidentally, when the power source unit 111 is discharging, and current flows through the power supply wiring 510, a voltage drop occurs due to the wiring resistance in the power supply wiring 510 from the power connection 51 side (current upstream side) to the step-up DC/DC converter 82 side (current downstream side). In particular, the conductive track 805 of the fifth electrically conductive layer L5 is formed longer than the conductive tracks of other layers because it extends from the lower region to the central region of the main board 50 and has a larger area of wiring. In other words, the conductive track 805 of the fifth conductive layer L5 is where the voltage drop during discharge in the power supply wiring 510 is high.

As a voltage drop occurs on the power supply wiring 510 when discharging, the power supply voltage measured by the power supply voltage measurement pin Ps1 of the charging IC 81 takes a different value depending on the connection position between the voltage measurement wiring 530 and the power supply wiring 510.

Specifically, as shown in Fig. 8, there is a difference in the power supply voltage measured by the power supply voltage measurement pin Ps1 depending on whether the power supply voltage measurement pin Ps1 of the charging IC 81 is connected via the voltage measurement wiring 530 to a position P1 on the power supply wiring 510 close to the step-up DC/DC converter 82 or to a position P0 close to the power connection 51. Here, position P1 is, for example, a position closer to the step-up DC/DC converter 82 side than the conductive track 805, which has a higher voltage drop in the power supply wiring 510 during discharge, and in this embodiment, as previously described, position P1 is in the vicinity of the step-up DC/DC converter 82 of the conductive track 801. The position P0 is, for example, a position closer to the power connection 51 side than the conductive track 805. Also, the higher the current that flows through the power supply wiring 510 during discharge, the greater the voltage drop, so depending on the measurement position of the power supply voltage, the voltage difference can be large.

As the power supply voltage in the vicinity of the step-up DC/DC converter 82 is input to the power connection pin Pb of the charging IC 81, when the power supply voltage measurement pin Ps1 of the charging IC 81 is connected via the voltage measurement wiring 530 to position P0 close to the power connection 51, there will be a discrepancy between the power supply voltage input to the charging IC 81 and the power supply voltage measured by the power supply voltage measurement pin Ps1 during discharge.

Therefore, in this embodiment, the power supply voltage measurement pin Ps1 of the charging IC 81 is connected via the voltage measurement wiring 530 to a position P1 closer to the step-up DC/DC converter 82 than to the power connection 51 in the power supply wiring 510. This allows the power supply voltage measurement pin Ps1 to measure the power supply voltage taking into account the voltage drop that occurs in the power supply wiring 510 during discharge, improving the accuracy of measuring the power supply voltage during discharge.

Also, since the power connection pin Pb of the charging IC 81 is connected to the power supply wiring 510 near the position P1 and the power supply voltage is input thereto, the discrepancy between the power supply voltage input to the charging IC 81 and the power supply voltage measured by the power supply voltage measurement pin Ps1 can be reduced.

Also, as previously described, operation of the charging IC 81 is stopped if the voltage measured by the power supply voltage measurement pin Ps1 is less than the first threshold. Specifically, the charging IC 81 stops supplying power to various electronic components, and so on, mounted in the main board 50 when the voltage measured by the power supply voltage measurement pin Ps1 is less than the first threshold.

If, for example, the power supply voltage measurement pin Ps1 is connected to the position P0 close to the power connection 51, operation of the charging IC 81 may continue even if the voltage input to the charging IC 81 is below the first threshold, as a value greater than the power supply voltage input to the charging IC 81 is measured by the power supply voltage measurement pin Ps1. In this embodiment, the power supply voltage measurement pin Ps1 is connected to the position P1 close to the step-up DC/DC converter 82, so that a voltage close to the power supply voltage input to the charging IC 81 can be measured, and a determination with regards to operation of the charging IC 81 can be appropriately made.

Elaborating on the position P1 to which the power supply voltage measurement pin Ps1 of the charging IC 81 is connected, the position P1 is between the power connection 51 and the inductor L on the power supply wiring 510, closer to the inductor L than the power connection 51, as shown in Fig. 8. In particular, the position P1 is located immediately before the inductor L in the current flow direction during discharge.

Also describing in more detail with reference to Fig. 7, the position P1 is a position closer to the step-up DC/DC converter 82 side than the conductive track 805 with the largest wiring area of the conductive tracks 801 to 810 formed in each conductive layer. Since the portion of the power supply wiring 510 formed in the conductive track 805 has the largest area of the wiring and has the highest voltage drop during discharge, measuring the power supply voltage more to the step-up DC/DC converter 82 side (in other words on the current downstream side of the conductive track 805 during discharge) than the conductive track 805 can improve the accuracy of measuring the power supply voltage during discharge.

As shown in Fig. 6, the charging IC 81 is arranged on the main board 50 at a location closer to the step-up DC/DC converter 82 than the power connection 51. In this way the voltage measurement wiring 530 connected near the input side of the step-up DC/DC converter 82 can be shortened, and a more accurate measurement of the power supply voltage by the power supply voltage measurement pin Ps1 can be obtained.

As shown in Fig. 7, the power supply voltage measurement pin Ps2 (see Fig. 6) of the MCU 1 is connected to the resistance 88 mounted on the back surface 502 of the main board 50 through a conductive track or via formed in the first conductive layer L1 to tenth conductive layer L10. The resistance 88 is connected to the branch wiring 512, which is branched from the power supply wiring 510, via the switching element 89 (for example, a MOSFET). In the figure, the branch point that is the connection between the power supply wiring 510 and the branch wiring 512 is denoted with the reference sign 512a. The branch wiring 512 is configured from a conductive track or via formed in the fifth conductive layer L5 to the tenth conductive layer L10, and branches from the conductive track 805 formed in the fifth conductive layer L5.

The conductive track or via formed between the MCU 1 and the resistance 88 in the first L1 to tenth conductive layers L10 constitutes voltage measurement wiring 540 for measuring the power supply voltage, and the power supply voltage measurement pin Ps2 measures the power supply voltage near the end of the MCU 1 side of the end of the resistance 88. The voltage measurement wiring 540 can be formed with a narrower width than the power supply wiring 510 because the current flowing is smaller compared with that in the power supply wiring 510.

The power supply voltage measured by the power supply voltage measurement pin Ps2 of the MCU 1 is used, for example, to determine whether to permit heating by the heating unit 121, or to detect deep discharge and over-discharge, and so on. Explaining the determination of whether to permit heating in more detail, the MCU 1 compares the power supply voltage measured by the power supply voltage measurement pin Ps2 with a second threshold value, which is the lower limit value of the power supply voltage at which heating control for one heating session can be performed. A heating session is a time period from the start of heating by the heating unit 121 until heating is stopped as a result of satisfying a predetermined condition, in other words the period from the start of the process of generating an aerosol with the stick-shaped substrate 150 (specifically, the start of supplying power to the heating unit 121) to the end (specifically the end of generation of aerosol). The heating session may end when a predetermined time period has elapsed from the start of heating, or may end based on a predetermined number of puffs since the start of heating. For example, in response to a predetermined user operation such as pressing the operation portion 14, the MCU 1 measures the power supply voltage while supplying power to the heating unit 121 separately from the heating session. If the measured power supply voltage is equal to or greater than the second threshold, the MCU 1 permits heating by the heating unit 121. If the measured power supply voltage is less than the second threshold, the MCU 1 does not permit heating by the heating unit 121 for the next session. The predetermined user operation may be an operation for initiating heating. Also, if, for example at the end of a heating session, the measured power supply voltage is greater than or equal to the second threshold, the MCU 1 may permit heating by the heating unit 121 for the next session, and if the measured power supply voltage is less than the second threshold, heating by the heating unit 121 may not be permitted for the next session. This can prevent termination of heating control in the middle of a heating session due to the loss of power supplied to the heating unit 121 during the next heating control. In this way, the MCU 1 utilizes the power supply voltage measured by the power supply voltage measurement pin Ps2 to determine whether heating control for one heating session can be performed.

The power source voltage measured by the power supply voltage measurement pin Ps2 of the MCU 1 takes a different value depending on the connection position between the voltage measurement wiring 540 and the power supply wiring 510, similar to the power supply voltage measured by the power supply voltage measurement pin Ps1 of the charging IC 81. Specifically, as shown in Fig. 8, there is a difference in the power supply voltage measured by the power supply voltage measurement pin Ps2 depending on whether the power supply voltage measurement pin Ps2 of the MCU 1 is connected via the voltage measurement wiring 540 to the position P2 in the power supply wiring 510 close to the step-up DC/DC converter 82 or to the position P0 close to the power connection 51. Here, position P2 is, for example, a position more to the step-up DC/DC converter 82 side than the conductive track 805 with a higher voltage drop during discharge in the power supply wiring 510, in other words a position on the opposite side of the branch point 512a to the power connection 51. Also, the higher the current that flows through the power supply wiring 510 during discharge, the greater the voltage drop, so depending on the measurement position of the power supply voltage, the voltage difference can be large.

When the power supply voltage measurement pin Ps2 of the MCU 1 is connected via the voltage measurement wiring 540 to position P0 close to the power connection 51, there will be a discrepancy between the power supply voltage input to the step-up DC/DC converter 82 and the power supply voltage measured by the power supply voltage measurement pin Ps2 during discharge.

Therefore, in this embodiment, the power supply voltage measurement pin Ps2 of the MCU 1 is connected via the voltage measurement wiring 540 to the position P2 closer to the step-up DC/DC converter 82 than the power connection 51 in the power supply wiring 510. This enables the power supply voltage measurement pin Ps2 to measure the power supply voltage taking into account the voltage drop that occurs in the power supply wiring 510 during discharge, thereby improving the accuracy of measuring the power supply voltage during discharge. It can also reduce the discrepancy between the power supply voltage input to the step-up DC/DC converter 82 and the power supply voltage measured by the power supply voltage measurement pin Ps2.

Also, as previously described, the MCU 1 does not permit heating by the heating unit 121 if the power supply voltage measured by the power supply voltage measurement pin Ps2 is less than the second threshold. If, for example, the power supply voltage measurement pin Ps2 is connected to the position P0 close to the power connection 51, a value greater than the power supply voltage input to the step-up DC/DC converter 82 is measured by the power supply voltage measurement pin Ps2, so heating may be permitted even when heating should not be allowed. In this embodiment, the power supply voltage measurement pin Ps2 is connected to the position P2 close to the step-up DC/DC converter 82, so that a voltage close to the power supply voltage input to the step-up DC/DC converter 82 can be measured, and the decision to permit heating can be appropriately made.

In particular, as previously described, the second threshold is set based on a power supply voltage capable of controlling the heating of one heating session, so it is possible to prevent the MCU 1 from terminating heating control in the middle of the heating session due to insufficient power to supply to the heating unit 121 in the next heating session.

Circuit components (resistance 88 and switching element 89 in this embodiment) connected in series between the power source unit 111 and the MCU 1 are mounted on the main board 50, and the voltage measurement wiring 540 connected to the power supply voltage measurement pin Ps2 of the MCU 1 is electrically connected to contacts on the MCU 1 side of the circuit components. Since the power supply voltage measurement pin Ps2 of the MCU 1 measures the voltage on the MCU 1 side rather than on the circuit components side, the power supply voltage can be measured taking into account the effect of voltage drop due to the circuit components.

The position P2 is also a position closer to the step-up DC/DC converter 82 side than the conductive track 805 with the largest wiring area of the conductive tracks 801 to 810 formed in each e conductive layer. Specifically, the branch wiring 512 branches from the branch point 512a provided on the step-up DC/DC converter 82 side of the conductive track 805, and is connected to the voltage measurement wiring 540 at the tenth conductive layer L10 via the switching element 89 and the resistance 88. Position P2 is a position on the voltage measurement wiring 540. Measuring the power supply voltage more to the step-up DC/DC converter 82 side than the conductive track 805 can provide a more accurate measurement of the power supply voltage during discharge, as the portion of the power supply wiring 510 formed on the conductive track 805 has the largest wiring area and the highest voltage drop.

Also as shown in Fig. 6, the MCU 1 is arranged on the main board 50 closer to the step-up DC/DC converter 82 than the power connection 51. Since the power supply voltage measurement pin Ps2 of the MCU 1 measures the power supply voltage at a position close to the step-up DC/DC converter 82, the voltage measurement wiring 540 of the power supply voltage measurement pin Ps2 can be shortened by placing the MCU 1 at a position close to the step-up DC/DC converter 82. Therefore, the accuracy of measuring the power supply voltage with the power supply voltage measurement pin Ps2 can be improved.

As described above, in this embodiment, the power supply voltage measurement pin Ps1 of the charging IC 81 and the power supply voltage measurement pin Ps2 of the MCU 1 are connected via the voltage measurement wiring 530, 540 to positions P1, P2 respectively, which are closer to the step-up DC/DC converter 82 than to the power connection 51 in the power supply wiring 510, so for both the power supply voltage measured by the charging IC 81 and the power supply voltage measured by the MCU 1, the measurement accuracy during discharge can be improved. Note that there is no limitation to this arrangement, for example, one of the power supply voltage measurement pin Ps1 of the charging IC 81 and the power supply voltage measurement pin Ps2 of the MCU 1 may be connected to the position P0 close to the power connection 51 in the power supply wiring 510.

The relationship between the charging IC 81 and the MCU 1 will now be described, and the charging IC 81 is arranged on the main board 50 at a position closer to the power connection 51 than the MCU 1. In this way, by placing the charging IC 81 closer to the power connection 51 in preference to the MCU 1, the power supply wiring 510 with a high current flowing can be shortened, and power losses during charging and/or discharging can be reduced.

Also, the charging IC 81 is located on the main board 50 closer to the step-up DC/DC converter 82 than the MCU 1 to preferentially improve the accuracy of measuring the power supply voltage by the power supply voltage measurement pin Ps1 of the charging IC 81. This improves the accuracy of determining when to stop the operation of the charging IC 81, and can prevent unnecessary operation stops.

Also as shown in Fig. 7, the voltage measurement wiring 530 of the charging IC 81 is configured to be shorter than the voltage measurement wiring 540 of the MCU 1. In this way, the accuracy of measuring the voltage of the charging IC 81 can be increased preferentially.

The embodiments of the present invention have been described above with reference to the drawings, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within the scope that does not depart from the essential point of the invention.

The present specification, etc., sets forth at least the following features. Corresponding components, etc. in the embodiments described above are shown by way of example in parentheses, but there is no limitation to such components.
(1) A power supply unit (power supply unit 110) for an aerosol-generating device (inhalation device 100) for generating an aerosol by heating an aerosol source, the power supply unit comprising:
   a power source (power source unit 111) for supplying power to a heating unit (heating unit 121) that heats the aerosol source;
   a power conversion unit (step-up DC/DC converter 82) for converting power from the power source and supplying power for heating to the heating unit;
   a control unit (charging IC 81, MCU 1) for controlling the operation of the power supply unit; and
   a board (main board 50) on which a power connection (power connection 51) to which power is supplied from the power source, the power conversion unit, and the control unit are mounted, wherein
   the control unit has a power supply voltage measurement unit (the power supply voltage measurement pin Ps1 of the charging IC 81, the power supply voltage measurement pin Ps2 of the MCU 1) for measuring the voltage of the power source, and
   the power supply voltage measurement unit is connected via voltage measurement wiring to a position (position P1, position P2) closer to the power conversion unit than the power connection on the power supply wiring (power supply wiring 510) that connects the power connection and the power conversion unit.

According to (1), since the power supply voltage measurement unit of the control unit is connected to a position on the power supply wiring close to the power conversion unit, the power supply voltage can be measured taking into account the voltage drop that occurs in the power supply wiring when discharging. Therefore, the accuracy of measuring the power supply voltage during discharge can be improved.

(2) The power supply unit for an aerosol-generating device as disclosed in (1), wherein the control unit (charging IC 81)
is connected to a position closer to the power conversion unit than the power connection on the power supply wiring, and the power supply voltage is input thereto, and
if the voltage measured by the power supply voltage measurement unit is less than a first threshold value, which is the lower limit of the voltage at which the control unit can operate, operation is stopped.

According to (2), the voltage measured by the power supply voltage measurement unit is used by the control unit to determine whether to stop operation. Since the control unit is connected to a position close to the power conversion unit on the power supply wiring and the power supply voltage is input, and the power supply voltage measurement unit of the control unit is connected to a position close to the power conversion unit on the power supply wiring, the decision to stop operation of the control unit can be appropriately made based on the power supply voltage measured with high precision.

(3) The power supply unit for an aerosol-generating device as disclosed in (2), wherein the control unit
supplies power from the power source to electronic components mounted on the board, and stops the supply of power to the electronic components when the voltage measured by the power supply voltage measurement unit is less than the first threshold.

According to (3), the decision to stop the power supply operation to the electronic components by the control unit can be appropriately made based on the power supply voltage measured with high precision.

(4) The power supply unit for an aerosol-generating device as disclosed in (2) or (3), wherein
the power supply voltage measurement unit is connected via the voltage measurement wiring to a position between the power connection on the power supply wiring and an inductor (inductor L) provided at an input side of the power conversion unit, closer to the inductor than the power connection.

According to (4), the power supply voltage can be measured before the power conversion.

(5) The power supply unit for an aerosol-generating device as disclosed in any of (1) to (4), wherein
the control unit comprises a first control unit (charging IC 81) for controlling charging of the power source.

According to (5), the decision to stop the operation of the first control unit controlling the charging of the power source can be appropriately made.

(6) The power supply unit for an aerosol-generating device as disclosed in (1), wherein
the control unit comprises a second control unit (MCU 1) for controlling heating by the heating unit.

According to (6), the power supply voltage measurement unit of the second control unit for controlling the heating measures the power supply voltage with good accuracy at a position close to the power conversion unit, so that the heating control can be performed appropriately.

(7) The power supply unit for an aerosol-generating device as disclosed in (6), wherein
the second control unit does not permit heating by the heating unit if the voltage measured by the power supply voltage measurement unit is less than a second threshold.

According to (7), the decision to permit heating by the heating unit can be appropriately made based on the power supply voltage measured with high precision.

(8) The power supply unit for an aerosol-generating device as disclosed in (7), wherein
the second control unit is configured to enable control of a heating session from the start of heating by the heating unit until heating is stopped as a result of satisfying a predetermined condition, and
the second threshold is set based on a power supply voltage that enables heating control of one heating session to be performed.

According to (8), the decision to permit heating control by the heating unit for a single heating session can be appropriately made based on the power supply voltage measured with high precision.

(9) The power supply unit for an aerosol-generating device as disclosed in any of (6) to (8), wherein
circuit components (resistance 88, switching element 89) connected in series between the power source and the second control unit are mounted on the board, and
the voltage measurement wiring of the second control unit is electrically connected to a contact on the second control unit side of the circuit components.

According to (9), the voltage measurement wiring of the second control unit is connected to the power supply wiring at a position away from the power connection, thereby improving the accuracy of measuring the power supply voltage during discharge. In other words, since the voltage measurement wiring of the second control unit measures the voltage more to the second control unit side than the circuit components as viewed from the power connection, it is possible to measure the battery voltage taking into account the effect of the voltage drop due to the circuit components.

(10) The power supply unit for an aerosol-generating device as disclosed in any of (1) to (9), wherein
the board has a multi-layer structure and the power supply wiring is formed over a plurality of layers (first conductive layer L1 to tenth conductive layer L10), and
the power supply voltage measurement unit is connected to the power supply wiring via the voltage measurement wiring more to the power conversion unit side than the power supply wiring (conductive track 805) with the largest wiring area among the power supply wiring formed in the plurality of layers.

According to (10), the accuracy of measuring the power supply voltage during discharge can be improved because the power supply voltage is measured taking into account the voltage drop generated in the power supply wiring with the largest wiring area among the power supply wiring formed in the plurality of layers.

(11) The power supply unit for an aerosol-generating device as disclosed in any of (1) to (10), wherein
the control unit is arranged on the board at a position closer to the power conversion unit than the power connection.

According to (11), the voltage measurement wiring can be shortened because the control unit is arranged in a position close to the power conversion unit.

(12) The power supply unit for an aerosol-generating device as disclosed in any of (1) to (11), wherein
the control unit comprises a first control unit (charging IC 81) for controlling charging of the power source and a second control unit (MCU 1) for controlling heating by the heating unit, and
the power supply voltage measurement unit of the first control unit and the power supply voltage measurement unit of the second control unit are connected via the voltage measurement wiring to a position (position P1, position P2) closer to the power conversion unit than the power connection on the power supply wiring.

According to (12), the accuracy of measuring the power supply voltage can be improved for both the first control unit and the second control unit.

(13) The power supply unit for an aerosol-generating device as disclosed in (12), wherein
the first control unit is arranged on the board at a position closer to the power connection than the second control unit.

According to (13), since the first control unit is arranged close to the power connection, the power supply wiring connecting the first control unit and the power connection can be shortened, reducing power loss during charging and/or discharging.

(14) The power supply unit for an aerosol-generating device as disclosed in (12) or (13), wherein
the voltage measurement wiring of the first control unit is shorter than the voltage measurement wiring of the second control unit.

According to (14), the accuracy of measuring the voltage of the first control unit can be increased preferentially.

### REFERENCE SIGNS LIST

1 MCU (control unit, second control unit)
50 Main board (board)
51 Power connection
510 Power supply wiring
81 Charging IC (control unit, first control unit)
82 Step-up DC/DC converter (power conversion unit)
100 Inhalation device (aerosol-generating device)
110 Power supply unit
111 Power source unit (power source)
121 Heating unit
L Inductor
L1 to L10 First to tenth conductive layers (plurality of layers)
Ps1 Power supply voltage measurement pin of the charging IC
Ps2 Power supply voltage measurement pin of the MCU

## Claims

1. A power supply unit for an aerosol-generating device for generating an aerosol by heating an aerosol source, the power supply unit comprising:
a power source for supplying power to a heating unit that heats the aerosol source;
a power conversion unit for converting power from the power source and supplying power for heating to the heating unit;
a control unit for controlling the operation of the power supply unit; and
a board on which a power connection to which power is supplied from the power source, the power conversion unit, and the control unit are mounted, wherein
the control unit has a power supply voltage measurement unit for measuring the voltage of the power source, and
the power supply voltage measurement unit is connected via voltage measurement wiring to a position closer to the power conversion unit than the power connection on the power supply wiring that connects the power connection and the power conversion unit.

2. The power supply unit for an aerosol-generating device as claimed in claim 1,
wherein
the control unit
is connected to a position closer to the power conversion device than the power connection on the power supply wiring, and the power source voltage is input thereto, and
if the voltage measured by the power supply voltage measurement unit is less than a first threshold value, which is the lower limit of the voltage at which the control unit can operate, operation is stopped.

3. The power supply unit for an aerosol-generating device as claimed in claim 2,
wherein
the control unit
supplies power from the power source to electronic components mounted on the board, and
stops the supply of power to the electronic components when the voltage measured by the power supply voltage measurement unit is less than the first threshold.

4. The power supply unit for an aerosol-generating device as claimed in claim 2 or 3,
wherein
the power supply voltage measurement unit is connected via the voltage measurement wiring to a position between the power connection on the power supply wiring and an inductor provided provided at an input side of the power conversion unit, closer to the inductor than the power connection.

5. The power supply unit for an aerosol-generating device as claimed in any one of claims 1 to 4, wherein
the control unit comprises a first control unit for controlling charging of the power source.

6. The power supply unit for an aerosol-generating device as claimed in claim 1,
wherein
the control unit comprises a second control unit for controlling heating by the heating unit.

7. The power supply unit for an aerosol-generating device as claimed in claim 6,
wherein
the second control unit does not permit heating by the heating unit if the voltage measured by the power supply voltage measurement unit is less than a second threshold.

8. The power supply unit for an aerosol-generating device as claimed in claim 7,
wherein
the second control unit is configured to enable control of a heating session from the start of heating by the heating unit until heating is stopped as a result of satisfying a predetermined condition, and
the second threshold is set based on a power source voltage that enables heating control of one heating session to be performed.

9. The power supply unit for an aerosol-generating device as claimed in any one of claims 6 to 8, wherein
circuit components connected in series between the power source and the second control unit are mounted on the board, and
the voltage measurement wiring of the second control unit is electrically connected to a contact on the second control unit side of the circuit components.

10. The power supply unit for an aerosol-generating device as claimed in any one of claims 1 to 9, wherein
the board has a multi-layer structure and the power supply wiring is formed over a plurality of layers, and
the power supply voltage measurement unit is connected to the power supply wiring via the voltage measurement wiring more to the power conversion unit side than the power supply wiring with the largest wiring area among the power supply wiring formed in the plurality of layers.

11. The power supply unit for an aerosol-generating device as claimed in any one of claims 1 to 10, wherein
the control unit is arranged on the board at a position closer to the power conversion unit than the power connection.

12. The power supply unit for an aerosol-generating device as claimed in any one of claims 1 to 11, wherein
the control unit comprises a first control unit for controlling charging of the power source and a second control unit for controlling heating by the heating unit, and
the power supply voltage measurement unit of the first control unit and the power supply voltage measurement unit of the second control unit are connected via the voltage measurement wiring to a position closer to the power conversion unit than the power connection on the power supply wiring.

13. The power supply unit for an aerosol-generating device as claimed in claim 12,
wherein
the first control unit is arranged on the board at a position closer to the power connection than the second control unit.

14. The power supply unit for an aerosol-generating device as claimed in claim 12 or 13, wherein
the voltage measurement wiring of the first control unit is shorter than the voltage measurement wiring of the second control unit.
